(19) Europäisches Patentamt
European Patent Office
Office européen des brevets

(11) **EP 4 679 938 A1**

(12) **EUROPÄISCHE PATENTANMELDUNG**

(43) Veröffentlichungstag:
**14.01.2026 Patentblatt 2026/03**

(21) Anmeldenummer: **25185120.0**

(22) Anmeldetag: **25.06.2025**

(51) Internationale Patentklassifikation (IPC):
**H05B 6/64** (2006.01)     **H05B 1/02** (2006.01)

(52) Gemeinsame Patentklassifikation (CPC):
**H05B 6/6473; H05B 1/0263;** F24C 7/085;
F24C 15/322; H05B 6/6441; H05B 6/645

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **12.07.2024 DE 102024119876**

(71) Anmelder: **Rational Aktiengesellschaft
86899 Landsberg am Lech (DE)**

(72) Erfinder:
• **Heinrich, Martin
86899 Landsberg am Lech (DE)**
• **Schmidt, Lilly-Marie
86899 Landsberg am Lech (DE)**

(74) Vertreter: **Prinz & Partner mbB
Patent- und Rechtsanwälte
Rundfunkplatz 2
80335 München (DE)**

(54) **VERFAHREN ZUM GAREN VON VERPACKTEM GARGUT**

(57) Die Erfindung betrifft ein Verfahren zum Garen von in einer Verpackung (20) verpacktem Gargut (14) in einem Gargerät (10), das eine Heizvorrichtung (24) und einen Lüfter (30) umfasst, wobei das Verfahren die folgenden Schritte umfasst: a) Vorgeben eines verpackungsspezifischen Grenzwerts für die Verpackung des Garguts (14); b) Ermitteln anhand des verpackungsspezifischen Grenzwerts einen zulässigen Parameterbereich für eine Lüfterdrehzahl des Lüfters (30) und eine Garraumtemperatur, wobei die Lüfterdrehzahl und die Garraumtemperatur im zulässigen Parameterbereich voneinander abhängen; und c) Steuern des Lüfters (30) und der Heizvorrichtung (24), sodass die Lüfterdrehzahl und die Garraumtemperatur im zulässigen Parameterbereich liegen. Ferner betrifft die Erfindung ein Gargerät, das dazu eingerichtet ist, das obige Verfahren durchzuführen.

Fig. 1

EP 4 679 938 A1

**Beschreibung**

Die Erfindung betrifft ein Verfahren zum Garen von in einer Verpackung verpacktem Gargut in einem Gargerät. Ferner betrifft die Erfindung ein Gargerät.

In Profi- bzw. Großküchen kommen Gargeräte zum Einsatz, die ein in einem Garraum des Gargeräts befindliches Gargut auf unterschiedliche Weise garen können. Üblicherweise werden Garverfahren verwendet, die das Gargut mittels Heißluft und/oder Dampf garen. Zunehmend werden bei modernen Gargeräten auch Mikrowellenquellen eingesetzt, die Mikrowellenstrahlung in den Garraum einspeisen, um (zusätzlich) Energie in das Gargut einzubringen.

Üblicherweise wird das Gargut unverpackt gegart und anschließend direkt zum Verzehr angeboten. Allerdings gewinnt die Zubereitung von verpacktem Gargut an Bedeutung. Insbesondere kann verpacktes Gargut hygienischer gehandhabt und ohne vorherige Portionierung direkt zum Verzehr angeboten werden, bspw. an sogenannten "Grab and Go"-Theken.

Bei der Zubereitung von verpacktem Gargut in modernen Gargeräten treten jedoch einige Herausforderungen auf. Beispielsweise muss bei der Einstellung der Prozessparameter für den Garverlauf, die das Gargut umgebende Verpackung berücksichtigt werden. Insbesondere ist darauf zu achten, dass durch die Garraumatmosphäre, insbesondere durch den Energieeintrag in die Verpackung, die Verpackung nicht beschädigt wird.

Die manuelle Einstellung der Prozessparameter unter Berücksichtigung der Verpackung ist für den Benutzer äußerst schwierig und fehleranfällig, da dieser auf Erfahrungswerte zurückgreifen muss, um den Einfluss der Prozessparameter auf die Verpackung abzuschätzen. Erschwerend kommt hinzu, dass viele Prozessparameter voneinander abhängen und einander beeinflussen, sodass nicht immer vorhersehbar ist, wie sich die Prozessparameter auf den Garverlauf und die Verpackung auswirken.

Insofern ist es die Aufgabe der vorliegenden Erfindung, ein Verfahren zum Garen von verpacktem Gargut bereitzustellen, das eine zuverlässige Eingabe der Prozessparameter ermöglicht, um ein verpacktes Gargut unter Berücksichtigung der Verpackung zu garen.

Die Aufgabe wird erfindungsgemäß gelöst durch ein Verfahren zum Garen von in einer Verpackung verpacktem Gargut in einem Gargerät, das eine Heizvorrichtung und einen Lüfter umfasst, wobei das Verfahren die folgenden Schritte umfasst:

a) Vorgeben eines verpackungsspezifischen Grenzwerts für die Verpackung des Garguts;

b) Ermitteln anhand des verpackungsspezifischen Grenzwerts einen zulässigen Parameterbereich für eine Lüfterdrehzahl des Lüfters und eine Garraumtemperatur, wobei die Lüfterdrehzahl und die Garraumtemperatur im zulässigen Parameterbereich voneinander abhängen; und

c) Steuern des Lüfters und der Heizvorrichtung, sodass die Lüfterdrehzahl und die Garraumtemperatur im zulässigen Parameterbereich liegen.

Das erfindungsmäße Verfahren beruht auf dem Grundgedanken, dem Gargerät als Ausgangspunkt lediglich einen verpackungsspezifischen Grenzwert vorzugeben, worauf basierend das Gargerät in Schritt b) automatisch einen zulässigen Parameterbereich für die Lüfterdrehzahl und die Garraumtemperatur ermittelt, sodass ein Benutzer sich nicht mit der Einstellung dieser Prozessparameter im Hinblick auf Verwendungssicherheit der Verpackung auseinandersetzen muss. Die Verwendungssicherheit der Verpackung ist dadurch gegeben, dass das Gargerät im Schritt c) basierend auf dem zulässigen Parameterbereich den Lüfter und die Heizvorrichtung so steuert, dass der verpackungsspezifische Grenzwert für die Verpackung des Garguts nicht überschritten wird. Hierdurch wird die Fehleranfälligkeit für die Eingabe der Prozessparameter reduziert und das verpackte Gargut kann auf einfache Weise unter Berücksichtigung der Verpackung gegart werden.

Bei dem zulässigen Parameterbereich handelt es sich um ein Arbeitsfenster, in dem die Garraumtemperatur und die Lüfterdrehzahl frei geregelt werden können, ohne die Verwendungssicherheit der Verpackung zu gefährden, womit gemeint ist, dass die Verpackung weder aufweicht, auseinanderbricht, durchbricht und/oder es zu einer stofflichen Veränderung des in der Verpackung verwendeten Verpackungsmaterials kommt.

Es wurde insbesondere erkannt, dass ein Wärmefluss in der Verpackung sowohl von der Garraumtemperatur als auch der Lüfterdrehzahl des Lüfters abhängt, weswegen beide Parameter berücksichtigt werden. Gerade diese Zusammenhänge sind aber für einen Nutzer des Gargeräts nicht intuitiv zu verstehen, weshalb es zu Fehlbedingungen kommen würde. Aufgrund der Berücksichtigung des verpackungsspezifischen Grenzwerts und des basierend hierauf automatisiert ermittelten Parameterbereichs für die Lüfterdrehzahl und die Garraumtemperatur kann demnach sichergestellt werden, dass die Verpackung nicht beschädigt wird, insbesondere nicht einem zu hohen Energieeintrag ausgesetzt ist.

Gemäß einem ersten Aspekt der Erfindung ist es vorgesehen, dass der verpackungsspezifische Grenzwert dem Gargerät mittels eines Sensors oder über eine Benutzerschnittstelle vorgegeben wird. Dadurch kann der verpackungsspezifische Grenzwert dem Gargerät auf einfache Weise zur Verfügung gestellt werden, um automatisiert vom Gargerät weiterverarbeitet zu werden.

Bevorzugt handelt es sich bei dem Sensor um einen Code-Sensor, beispielsweise einen 2D-Code-Sensor, oder einen RFID-Sensor. Diese Sensoren können verschiedene Arten von Codes auslesen, die beispielsweise auf der Verpackung des zu garenden Garguts in Form eines Barcodes, QR-Codes oder eines RFID-Tags aufgebracht sind. Dadurch kann der verpackungsspezifische Grenzwert besonders benutzerfreundlich vom Gargerät erfasst werden.

Gemäß einem weiteren Aspekt der Erfindung ist es vorgesehen, dass der zulässige Parameterbereich basierend auf einem Modell, einem funktionalen Zusammenhang oder einer Tabelle, insbesondere anhand empirischer Daten, in Abhängigkeit des verpackungsspezifischen Grenzwerts ermittelt wird. Beispielsweise kann das Modell, der funktionale Zusammenhang oder die Tabelle im Vorhinein empirisch für verschiedene Arten von Gargeräten, Gargütern und Verpackungen ermittelt und anschließend in einer Datenbank bzw. einem Speicher des Gargeräts hinterlegt werden. Dadurch kann der zulässige Parameterbereich für eine Lüfterdrehzahl des Lüfters und eine Garraumtemperatur besonders zuverlässig und zeiteffizient ermittelt werden. Die Datenbank kann auch extern zum Gargerät vorgesehen sein, insbesondere auf einem Server oder in einer Cloud (Cloud-Server), wobei das Gargerät auf die Datenbank zugreifen kann. Bei dem Modell kann es sich um ein deterministisches Modell handeln, in das mehrere Parameter einfließen. Auch kann es sich bei dem Modell um ein Modell basierend auf einer künstlichen Intelligenz handeln, bspw. ein Maschinenlernmodell, das zumindest den verpackungsspezifischen Grenzwert für die Verpackung des Garguts als Eingangsgröße und den zulässigen Parameterbereich für die Lüfterdrehzahl des Lüfters und die Garraumtemperatur als Ausgangsgröße umfasst. Insofern kann das Modell ein statistisches Modell sein.

Ein weiterer Aspekt der Erfindung sieht vor, dass der verpackungsspezifische Grenzwert ein vorgegebener Wärmegrenzwert oder ein vorgegebener Temperaturgrenzwert ist. Es hat sich herausgestellt, dass ein Wärmegrenzwert oder ein Temperaturgrenzwert einen besonders günstigen Ausgangspunkt darstellen, um darauf basierend zuverlässig den zulässigen Parameterbereich für die Lüfterdrehzahl des Lüfters und die Garraumtemperatur zu ermitteln.

Gemäß einem weiteren Aspekt der Erfindung ist es vorgesehen, dass der Wärmegrenzwert anhand des vorgegebenen Temperaturgrenzwerts unter der Berücksichtigung wenigstens eines wärmestromrelevanten Parameters bestimmt wird. Der wärmestromrelevante Parameter kann ein Wärmeübergangskoeffizient oder eine wärmeaufnehmende Produktoberfläche der Verpackung des zu garenden Garguts sein. Insbesondere handelt es sich bei dem Wärmegrenzwert um einen maximal zulässigen Wärmestromdichtewert für die Verpackung des zu garenden Garguts. Diesem Aspekt liegt die Erkenntnis zugrunde, dass der Wärmegrenzwert einen steuerungstechnisch günstigen Ausgangspunkt darstellt, von dem aus der zulässige Parameterbereich besonders einfach bestimmt werden kann.

Gemäß einem anderen Aspekt der Erfindung ist es vorgesehen, dass der zulässige Parameterbereich basierend auf einer maximal zulässigen Wärmestromdichte für die Verpackung des zu garenden Garguts ermittelt wird. Bevorzugt wird die maximal zulässige Wärmestromdichte in einem Modell, einem funktionalen Zusammenhang oder einer Tabelle, insbesondere anhand empirischer Daten, verwendet, um den zulässigen Parameterbereich zu ermitteln. Beispielsweise kann die maximal zulässige Wärmestromdichte mit den Parametern Lüfterdrehzahl und Garraumtemperatur korreliert werden, um einen zulässigen Parameterbereich in Form eines Arbeitsfensters zu erhalten, indem diese geregelt werden können, ohne die Verwendungssicherheit der Verpackung zu gefährden. Folglich wird der zulässige Parameterbereich durch den maximal zulässigen Wärmestromdichtewert definiert, der den maximal zulässigen Wärmestrom bzw. Wärmefluss pro Verpackungsoberfläche repräsentiert, also den maximalen Energiefluss, der durch die Garraumtemperatur und die Lüfterdrehzahl bei einer gegebenen Zeit auf das verpackte Gargut übertragen werden darf, um eine Beschädigung der Verpackung zu verhindern.

Ein weiterer Aspekt der Erfindung sieht vor, dass das Gargerät beim Ermitteln des zulässigen Parameterbereichs neben dem verpackungsspezifischen Grenzwert zusätzlich wenigstens einen verpackungsbezogenen Parameter berücksichtigt. Bei dem verpackungsbezogenen Parameter kann es sich beispielsweise um ein Gewicht des verpackten Garguts inklusive der Verpackung, eine gargutspezifische Kenngröße des zu garenden Garguts oder eine werkstoffspezifische Kenngröße der Verpackung des zu garenden Garguts, bevorzugt ein Feuchtegrenzwert oder ein Mikrowellengrenzwert, handeln. Mit den vorgenannten verpackungsbezogenen Parametern kann der zulässige Parameterbereich noch exakter bestimmt werden, wodurch das Verfahren insgesamt zuverlässiger wird. Die Wärmemenge, die vom verpackten Gargut aufgenommen werden kann, kann vom Gewicht des verpackten Garguts sowie einer gargutspezifischen Kenngröße des zu garenden Garguts abhängen, was wiederum einen Einfluss hat, welcher Wärmeenergie die Verpackung ausgesetzt ist. Ebenso kann die werkstoffspezifische Kenngröße der Verpackung einen entsprechenden Einfluss haben, sofern bspw. eine thermische Abschirmung des verpackten Garguts erfolgt.

Ein weiterer Aspekt der Erfindung sieht vor, dass ein Mindestwert für die Lüfterdrehzahl des Lüfters und/oder die Garraumtemperatur vorgegeben ist, insbesondere in Abhängigkeit eines Garprogramms, basierend auf dem das Gargut im Gargerät gegart wird. Durch den Mindestwert für die Lüfterdrehzahl des Lüfters kann vorteilhafterweise sichergestellt werden, dass sich keine Schichtung von verschiedenen Temperaturzonen im Garraum ergibt. Dadurch wird das Gargut besonders gleichmäßig gegart, unabhängig von der Position im Garraum. Ein Mindestwert für die Garraumtemperatur stellt sicher, dass abhängig von der Art des Garguts

Ein anderer Aspekt der Erfindung sieht vor, dass der zulässige Parameterbereich zusätzlich einen Wert für die Garraumfeuchte umfasst, wobei die Garraumfeuchte, die Lüfterdrehzahl und die Garraumtemperatur im zulässigen Parameterbereich voneinander abhängen, und wobei ein Dampferzeuger zusätzlich derart angesteuert wird, dass die Garraumfeuchte im zulässigen Parameterbereich liegt. Vereinfacht ausgedrückt wird nun zusätzlich zu den Parametern Lüfterdrehzahl und Garraumtemperatur noch ein Wert für die Garraumfeuchte hinzugefügt, wodurch sich die Anzahl an Steuerungsmöglichkeiten für das Gargerät in Schritt c) erhöht. Ferner können feuchtigkeitsempfindliche Verpackungen berücksichtigt werden, bspw. Verpackungen aus nachwachsenden Rohstoffen wie Pappe, sodass diese während des Garvorgangs nicht aufgrund einer zu hohen Garraumfeuchte durchweichen. Grundsätzlich definieren die Garraumfeuchte, die Lüfterdrehzahl und die Garraumtemperatur den Wärmetransport im Garraum bei einem konvektionsbasierten (mittels Heißluft und/oder Dampf) Garverfahren, sodass diese Parameter im zulässigen Parameterbereich voneinander abhängen. Der Wärmefluss in der Verpackung hängt vom Wärmetransport im Garraum ab, da die Verpackung, die das verpackte Gargut umgibt, in dem Garraum angeordnet ist, in dem der Wärmetransport stattfindet.

Ferner betrifft die Erfindung ein Gargerät zum Garen von einem verpackten Gargut, mit einem Garraum, wobei das Gargerät eine Heizvorrichtung und einen Lüfter aufweist, die eine Garraumatmosphäre im Garraum erzeugen. Zudem umfasst das Gargerät einen Temperatursensor zum Erfassen einer Garraumtemperatur sowie eine Auswerteeinheit, die signalübertragend mit dem Temperatursensor verbunden ist. Die Auswerteeinheit ist dazu eingerichtet, einen verpackungsspezifischen Grenzwert für die Verpackung des Garguts zu empfangen und anhand des verpackungsspezifischen Grenzwerts einen zulässigen Parameterbereich für die Lüfterdrehzahl des Lüfters und eine Garraumtemperatur zu ermitteln, wobei die Lüfterdrehzahl und die Garraumtemperatur im zulässigen Parameterbereich voneinander abhängen. Ferner weist das Gargerät eine Steuerung auf, die mit der Auswerteeinheit signalübertragend verbunden ist, wobei die Steuerung dazu eingerichtet ist, den Lüfter und die Heizvorrichtung anzusteuern, sodass die Lüfterdrehzahl und die Garraumtemperatur im zulässigen Parameterbereich liegen. Die Vorteile, die zum Verfahren diskutiert worden, gelten für das Gargerät in entsprechender Weise.

Weitere Merkmale und Vorteile der Erfindung ergeben sich aus der nachfolgenden Beschreibung und aus den Zeichnungen, auf die Bezug genommen wird. In den Zeichnungen zeigen:

- Figur 1 eine schematische Darstellung eines erfindungsgemäßen Gargeräts, beladen mit einem verpackten Gargut;

- Figur 2 ein schematisches Ablaufdiagramm der Schritte zum Durchführen eines erfindungsgemäßen Verfahrens zum Garen von in einer Verpackung verpacktem Gargut; und

- Figur 3 eine Darstellung eines funktionalen Zusammenhangs zwischen der Wärmestromdichte, der Garraumtemperatur und der Lüfterdrehzahl.

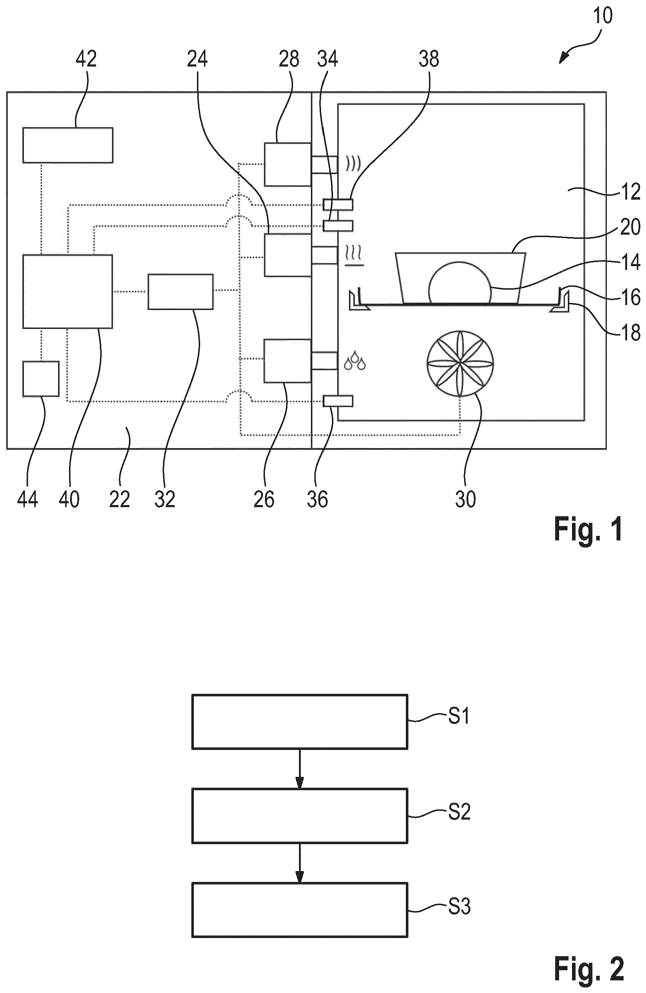

In Figur 1 ist ein Gargerät 10 gezeigt, das einen Garraum 12 aufweist. Der Garraum 12 ist mit einem Gargut 14 beladen, das auf einem Gargutträger 16, bspw. einem Blech, angeordnet ist. Der Gargutträger 16 kann über verschiedene Einschübe 18 in den Garraum 12 eingebracht werden, also in unterschiedlichen Ebenen.

Wie in Figur 1 gut zu erkennen ist, ist das Gargut 14 von einer Verpackung 20 umgeben, die das Gargut 14 mindestens teilweise umhüllt, bevorzugt vollständig umhüllt. Die Verpackung 20 kann mit einer Perforierung (hier nicht gezeigt) versehen sein, um einen Austausch zwischen der Garraumatmosphäre im Garraum 12 und dem Gargut 14 zu ermöglichen. Es kann aber auch vorgesehen sein, dass die Verpackung 20 keine Perforierung aufweist, wodurch sich innerhalb der Verpackung 20 eine Mikroatmosphäre für das Gargut 14 ausbilden kann, die von der Garatmosphäre im Garraum 12 abhängt.

Die Verpackung 20 ist aus einem Verpackungsmaterial gebildet, das grundsätzlich für das Garen im Garraum 12 geeignet ist. Als Verpackungsmaterial kann beispielsweise ein Kunststoff wie Polyethylen oder Polypropylen verwendet werden. Das Verpackungsmaterial kann aber auch aus einem nachwachsenden Rohstoff wie Pappe hergestellt sein. Selbstverständlich sind auch Mischverpackungen aus Kunststoff und Pappe denkbar. Bevorzugt werden Verpackungen 20 verwendet, die für den einmaligen und nicht für den mehrmaligen Gebrauch gedacht sind.

Neben dem Garraum 12 ist ein Technikraum 22 im Gargerät 10 vorgesehen, in dem verschiedene Vorrichtungen zum Garen des Garguts 14 untergebracht sind.

Der Technikraum 22 umfasst wenigstens teilweise eine Heizvorrichtung 24, die dazu eingerichtet ist, den Garraum 12 mit Heißluft zu beaufschlagen, sodass im Garraum 12 eine bestimmte Garraumtemperatur eingestellt wird.

Wahlweise kann zusätzlich zu der Heizvorrichtung 24 ein Dampferzeuger 26 sowie eine Mikrowellenquelle 28 zumindest teilweise im Technikraum 22 untergebracht sein. Der Dampferzeuger 26 dient dazu, im Garraum 12 eine bestimmte Garraumfeuchte bereitzustellen. Die Mikrowellenquelle 28 kann Mikrowellenstrahlung in den Garraum 12 einspeisen, um das verpackte Gargut 14 zusätzlich mit Energie zu beaufschlagen. Bei der Mikrowellenquelle 28 kann es sich beispielsweise um ein Magnetron oder um ein Halbleiterbauteil handeln.

Zudem ist ein Lüfter 30 im Garraum 12 angeordnet, der von einer im Technikraum 22 untergebrachten Steuerung 32 gesteuert werden kann, die ferner die Heizvorrichtung 24, den Dampferzeuger 26 und die Mikrowellenquelle 28 ansteuert, sodass die Steuerung 32 eine bestimmte Garraumatmosphäre im Garraum 12 zum Garen des verpackten Garguts 14 erzeugen kann.

Ferner ist wenigstens ein Temperatursensor 34 im Garraum 12 angeordnet, um die Garraumtemperatur zu überwachen. Der Temperatursensor 34 ist mit einer Auswerteeinheit 40 verbunden, die ebenfalls im Technikraum 22 angeordnet ist.

Sofern der Dampferzeuger 26 und die Mikrowellenquelle 28 eingebaut sind, umfasst der Garraum 12 ferner einen Feuchtigkeitssensor 36 zur Überwachung der Garraumfeuchte und einen Mikrowellensensor 38 zur Überwachung der eingespeisten Mikrowellenstrahlung, insbesondere der eingespeisten Mikrowellenleistung oder der eingespeisten Mikrowellenenergie. Beide Sensoren 36, 38 sind jeweils signalübertragend mit der im Technikraum 22 untergebrachten Auswerteeinheit 40 verbunden.

Die Auswerteeinheit 40 ist ferner dazu eingerichtet, einen verpackungsspezifischen Grenzwert für die Verpackung 20 des Garguts 14 zu empfangen und anhand des verpackungsspezifischen Grenzwerts einen zulässigen Parameterbereich für die Lüfterdrehzahl des Lüfters 30 und eine Garraumtemperatur zu ermitteln, wobei die Lüfterdrehzahl und die Garraumtemperatur im zulässigen Parameterbereich voneinander abhängen.

Die Auswerteeinheit 40 des Gargeräts 10 ist dazu mit der Steuerung 32 signalübertragend verbunden, wobei die Steuerung 32 dazu eingerichtet ist, den Lüfter 30 und die Heizvorrichtung 24 basierend auf dem von der Auswerteeinheit 40 vorgegebenen zulässigen Parameterbereich so anzusteuern, dass die Garraumtemperatur und die Lüfterdrehzahl im zulässigen Parameterbereich liegen.

Es ist auch denkbar, dass die Auswerteeinheit 40 und die Steuerung 32 als eine gemeinsame Einheit ausgebildet sind, also als eine kombinierte Steuer- und Auswerteeinheit.

Die Auswerteeinheit 40 ist ferner mit einem Sensor 42 und einer Benutzerschnittstelle 44 signalübertragend verbunden. Über diese kann dem Gargerät 10 der verpackungsspezifische Grenzwert vorgegeben werden.

Beispielsweise kann die Benutzerschnittstelle 44 als ein Touchscreen ausgestaltet sein, über den ein Benutzer den verpackungsspezifischen Grenzwert manuell eingeben kann.

Alternativ und/oder zusätzlich kann der Benutzer den verpackungsspezifischen Wärmegrenzwert über den Sensor 42 dem Gargerät 10 vorgeben, bspw. indem der Benutzer ein auf der Verpackung 20 abgedruckten Code, insbesondere Barcode, mithilfe des Sensors 42 dem Gargerät 10 vorgibt. Bevorzugt ist der Sensor 42 als ein Code-Sensor, insbesondere als ein 2D-Code-Sensor, oder ein RFID-Sensor ausgeführt, wobei der dazugehörige (2D-)Code auf der Verpackung 20 aufgedruckt oder RFID-Tag in der Verpackung 20 integriert ist.

Selbstverständlich kann der Sensor 42 auch innerhalb des Garraums 12 angeordnet und dazu eingerichtet sein, einen auf der Verpackung 20 aufgebrachten Code automatisch auszulesen.

Nachfolgend wird ein Verfahren zum Garen von in einer Verpackung 20 verpacktem Gargut 14 anhand von Figur 2 erläutert.

Zu Beginn des Verfahrens wird das in einer Verpackung 20 verpackte Gargut 14 in den Garraum 12 eingebracht und/oder befindet sich bereits in diesem.

In einem ersten Schritt S1 wird ein verpackungsspezifischer Grenzwert für die Verpackung 20 des Garguts 14 dem Gargerät 10 vorgegeben.

Insbesondere kann der verpackungsspezifische Grenzwert dem Gargerät 10 vorgegeben werden, indem der verpackungsspezifische Grenzwert mittels des Sensors 42 vorgegeben wird. Der Sensor 42 kann einen auf der Verpackung 20 aufgebrachten (2D-)Code erfassen oder ein RFID-Tag auslesen, um den verpackungsspezifischen Grenzwert zu erhalten. Der verpackungsspezifische Grenzwert kann auch manuell über die Benutzerschnittstelle 44 eingegeben werden.

Bevorzugt ist der verpackungsspezifische Grenzwert ein vorgegebener Wärmegrenzwert oder ein vorgegebener Temperaturgrenzwert der Verpackung 20.

Bevorzugt wird dem Gargerät 10 im Schritt S1 ein Temperaturgrenzwert, ein Wärmeübergangskoeffizient und eine Produktoberfläche der Verpackung 20 vorgegeben. Diese Daten können gemeinsam in Form des (2D-)Codes oder mittels des RFID-Tags codiert sein, was vom Sensor 42 erfasst wird. Es ist aber auch denkbar, dass der Benutzer diese Daten manuell über die Benutzerschnittstelle 44 dem Gargerät 10 vorgibt. Insbesondere können die Daten gemeinsam in einem Stellvertreterwert codiert sein, sodass der Benutzer nur einzige Eingabe tätigen muss.

In einem nächsten Schritt S2 wird anhand des verpackungsspezifischen Grenzwerts ein zulässiger Parameterbereich für die Lüfterdrehzahl des Lüfters 30 und eine Garraumtemperatur ermittelt, wobei die Lüfterdrehzahl und die Garraumtemperatur im zulässigen Parameterbereich voneinander abhängen.

Mit anderen Worten wird also ein Wertebereich für die Lüfterdrehzahl, wobei dies einen entsprechenden Wertebereich für die Garraumtemperatur bedingt, da die Lüfterdrehzahl und die Garraumtemperatur im zulässigen Parameterbereich voneinander abhängen.

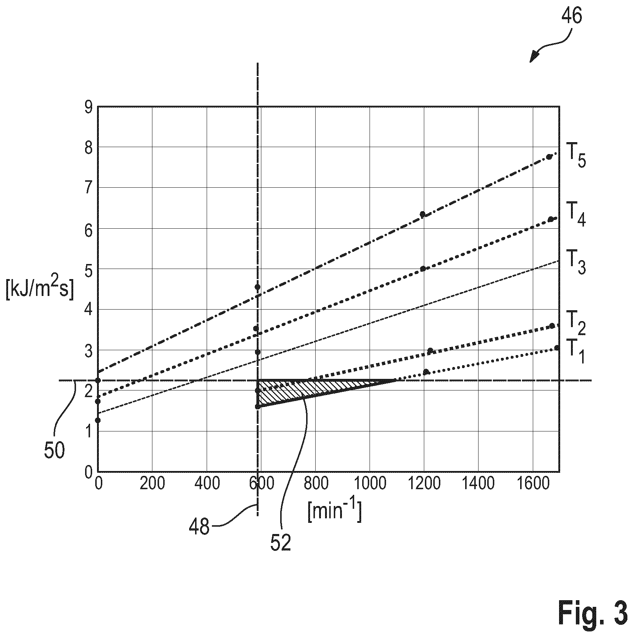

Beispielsweise kann der zulässige Parameterbereich basierend auf einem Modell, einem funktionalen Zusammenhang oder einer Tabelle, insbesondere anhand empirischer Daten in Abhängigkeit des verpackungsspezifischen Grenzwerts ermittelt werden. Ein derartiger funktionaler Zusammenhang 46 ist beispielsweise in Figur 3 gezeigt, der weiter unten im Detail erläutert wird.

Um die Garraumtemperatur und die Lüfterdrehzahl mit dem verpackungsspezifischen Grenzwert über ein Modell, einen funktionalen Zusammenhang oder eine Tabelle zu korrelieren, ist es vorteilhaft, diesen zunächst in einem Wert zu überführen, der einen maximal zulässigen Energiebetrag repräsentiert, der auf die Verpackung 20 übertragen werden darf, ohne dass die Verwendungssicherheit der Verpackung 20 dadurch gefährdet ist.

Dafür wird vorteilhafterweise der Wärmegrenzwert anhand des vorgegebenen Temperaturgrenzwerts und unter Berücksichtigung wenigstens eines wärmestromrelevanten Parameters bestimmt. Dies kann von der Auswerteeinheit 40 durchgeführt werden. Als wärmestromrelevanten Parameter kann beispielsweise ein Wärmeübergangskoeffizient und/oder eine wärmeaufnehmende Produktoberfläche der Verpackung 20 des zu garenden Garguts 14 verwendet werden.

Aus dem Temperaturgrenzwert, dem Wärmeübergangskoeffizient und der Produktoberfläche der Verpackung 20 kann die Auswerteinheit 40 einen maximal zulässigen Wärmestromdichtewert für die Verpackung 20 des zu garenden Garguts 14 bestimmen. Im Unterschied zum Wärmegrenzwert berücksichtigt der maximal zulässige Wärmestromdichtewert neben den Wärmeübergangskoeffizienten auch die Produktoberfläche der Verpackung 20 des zu garenden Garguts 14.

Der maximal zulässige Wärmestromdichtewert kann durch eine Auswerteeinheit 40 bestimmt werden, bevorzugt basierend auf der folgenden Formel:

$$\dot{q} = \alpha(DZ) \cdot (GT - T_0)$$

worin $\dot{q}$ die Wärmestromdichte ist, *also* $\frac{\dot{Q}}{A}$ entspricht, wobei A die wärmeaufnehmende Produktoberfläche der Verpackung 20 des zu garenden Garguts 14 und Q ein Wärmestrom ist. $\alpha(DZ)$ ist ein von der Drehzahl des verwendeten Gargeräts 10 abhängiger Wärmeübergangskoeffizient, $GT$ die Garraumtemperatur und $T_0$ der Temperaturgrenzwert.

Beispielsweise können die wärmeaufnehmende Produktoberfläche der Verpackung 20 und der Wärmeübergangskoeffizient $\alpha(DZ)$ in der Auswerteinheit 40 vorgespeicherte Werte sein, auf die während des Schritts S2 zurückgegriffen werden kann, um den Wärmestromdichtewert zu erhalten. Bevorzugt sind diese Werte in einer Datenbank oder einem Speicher (nicht gezeigt) der Auswerteeinheit 40 hinterlegt. Alternativ können, wie oben bereits beschrieben, diese Werte auch im Schritt S1 dem Gargerät 10 vorgegeben werden.

Wie bereits weiter oben erläutert wurde, entfällt die Notwendigkeit, mithilfe der Auswerteeinheit 40 und der obigen Formel den Wärmestromdichtewert zu bestimmen, wenn dem Gargerät 10 im Schritt S1 direkt ein maximal zulässiger Wärmestromdichtewert vorgegeben wird.

Mit dem maximal zulässigen Wärmestromdichtewert kann der zulässige Parameterbereich für die Verpackung 20 des zu garenden Garguts 14 ermittelt werden. Hierzu kann die Auswerteeinheit 40 beispielsweise auf ein Modell, eine Tabelle oder einen funktionalen Zusammenhang zurückgreifen, um den maximal zulässigen Wärmestromdichtewert mit den Garraumtemperatur und der Lüfterdrehzahl zu korrelieren, wie in Figur 3 gezeigt ist, auf die nachfolgend Bezug genommen wird.

Die Figur 3 zeigt einen funktionalen Zusammenhang 46 in Form eines Diagramms, bei dem die Wärmestromdichte auf der Y-Ordinate und eine mittlere Drehzahl des Lüfterrads 30 auf der X-Ordinate aufgetragen ist.

Ferner ist der lineare Zusammenhang zwischen der mittleren Drehzahl und einer Garraumtemperatur dargestellt, der sich in den verschiedenen Geraden widerspiegelt, wovon fünf bespielhaft eingezeichnet sind. Jede der Geraden ist einer Garraumtemperatur $T_x$ zugeordnet, wobei $T_1 < T_2$, $T_2 < T_3$, $T_3 < T_4$ und $T_4 < T_5$ ist. Die Geraden weisen verschiedene Y-Achsenabschnitte auf. Im konkreten Fall ist $T_1 = 80°C$, $T_2 = 90°C$, $T_3 = 120°C$, $T_4 = 140°C$ und $T_5 = 160°C$.

Der in Figur 3 gezeigte funktionale Zusammenhang 46 kann beispielweise im Vorhinein experimentell für das jeweilige Gargerät 10 ermittelt und in der Auswerteinheit 40 hinterlegt werden. Dazu ist es ausreichend, nur einige wenige Datenpunkte zu erheben. Die Werte zwischen den ermittelten Datenpunkten für die Geraden können auf einfache Weise inter- und/oder extrapoliert werden, sodass der funktionale Zusammenhang jede beliebige Garraumtemperatur berücksichtigt.

Ferner ist im Diagramm der Figur 3 eine vertikal verlaufende Achse 48 als eine gestrichelte Linie eingezeichnet, welche eine Mindestdrehzahl repräsentiert, die bei den Temperaturen $T_1$ und $T_2$ die mittlere Drehzahl nach unten begrenzt, um eine gleichmäßige Temperaturverteilung im Garraum 12 zu gewährleisten.

Ferner ist eine horizontal verlaufende Linie eingezeichnet, die den verpackungsspezifischen Grenzwert 50 in Form eines maximal zulässigen Wärmestromdichtewerts markiert. Zusätzlich kann auch ein Mindestwert für die Garraumtemperatur vorgegeben sein (hier nicht gezeigt).

Das Diagramm in Figur 3 zeigt auf, dass die Linie für den verpackungsspezifischen Grenzwert 50, also den maximal zulässigen Wärmestromdichtewert, einen Parameterbereich in Form eines Arbeitsfensters 52 definiert, in dem die Drehzahl und die Garraumtemperatur frei gewählt werden können, ohne den verpackungsspezifischen Grenzwert 50 zu überschreiten.

Das Arbeitsfenster 52 repräsentiert somit also den zulässigen Parameterbereich, in dem die Lüfterdrehzahl und die Garraumtemperatur geregelt werden können. Die Lüfterdrehzahl und die Garraumtemperatur hängen im zulässigen Parameterbereich voneinander ab, da die Temperatur $T_1$ für einen größeren Wertebereich der Lüfterdrehzahl möglich ist als die Temperatur $T_2$. Je nach Vorgabe der Mindesttemperatur und der Mindestdrehzahl kann sich die Form des Arbeitsfensters 52 und damit der zulässige Parameterbereich ändern. Im konkreten Fall weist das Arbeitsfenster die Form eines Dreiecks auf.

Beispielsweise könnte bei einem maximal zulässigen Wärmestromdichtewert von 2,2 kJ/m$^2$s eine Garraumtemperatur $T_1$ von 80°C und eine mittlere Drehzahl von 600 min$^{-1}$ von der Auswerteinheit 40 bestimmt und an die Steuerung 32 weitergegeben werden, sodass diese die gewählten Parameter im Garraum 12 einstellt. Alternativ könnte die Auswerteinheit 40 anhand des funktionalen Zusammenhangs 46 auch eine Temperatur $T_1$ von 80°C und eine maximale Drehzahl von 1.100 min$^{-1}$ einstellen, ohne den maximal zulässigen Wärmestromdichtewert zu überschreiten. Denkbar wäre auch eine Temperatur $T_2$ von 90°C und eine mittlere Drehzahl von 600 min$^{-1}$ bis 750 min$^{-1}$. Selbstverständlich könnten auch Temperaturen zwischen $T_1$ und $T_2$ und dazu entsprechende mittleren Drehzahlen gewählt werden, solange der zulässige Parameterbereich in Form des Arbeitsfensters 52 nicht verlassen wird.

Aus dem funktionalen Zusammenhang 46 in Form des Diagramms ist ersichtlich, dass auf einfache Weise verschiedene Kombinationen von Prozessparametern ausgewählt werden können, ohne den zulässigen Parameterbereich zu verlassen und den verpackungsspezifischen Grenzwert zu überschreiten. Damit ist stets die Verwendungssicherheit der Verpackung 20 gegeben. Anstatt eines funktionalen Zusammenhangs 46 kann auch ein Modell oder eine Tabelle in der Auswerteinheit 40 hinterlegt sein.

Zusätzlich kann der zulässige Parameterbereich einen Wert für die Garraumfeuchte umfassen, wobei die Garraumfeuchte, die Lüfterdrehzahl und die Garraumtemperatur im zulässigen Parameterbereich voneinander abhängen. In diesem Fall würde aus den gezeigten 2D-Diagramm ein 3D-Diagramm werden. Ebenso kann der zulässige Parameterbereich zusätzlich um einen Wert für die Mikrowellenleistung umfassen, wobei die Mikrowellenleistung, die Lüfterdrehzahl und die Garraumtemperatur im zulässigen Parameterbereich voneinander abhängen. Selbstverständlich kann der zulässige Parameterbereich auch die Mikrowellenleistung, die Garraumfeuchte, Lüfterdrehzahl und die Garraumtemperatur zusammen berücksichtigen.

Ferner kann im Schritt S2 beim Ermitteln des zulässigen Parameterbereichs wenigstens ein verpackungsbezogener Parameter berücksichtigt werden, insbesondere ein Gewicht des verpackten Garguts inklusive der Verpackung, eine gargutspezifische Kenngröße des zu garenden Garguts oder eine werkstoffspezifische Kenngröße der Verpackung des zu garenden Garguts, bevorzugt ein Feuchtegrenzwert oder ein Mikrowellengrenzwert. Der verpackungsspezifische Grenzwert kann über die Benutzerschnittstelle 44 oder den Sensor 42

dem Gargerät 10 vorgegeben werden.

In einem letzten Schritt S3, der wieder in Figur 2 gezeigt ist, wird der Lüfter 30 und die Heizvorrichtung 24 entsprechend dem zulässigen Parameterbereich durch die Steuerung 32 angesteuert. Dazu kann die Auswerteeinheit 40 die Steuerungsmöglichkeiten der Steuerung 32 auf den zulässigen Parameterbereich begrenzen, sodass diese den Lüfter 30 und die Heizvorrichtung 24 nur so ansteuern kann, dass die Lüfterdrehzahl und die Garraumtemperatur im zulässigen Parameterbereich liegen. Entsprechend können auch der Dampferzeuger 26 und die Mikrowellenquelle 28, sofern vorhanden, von der Steuerung 32 angesteuert werden.

## Patentansprüche

1. Verfahren zum Garen von in einer Verpackung (20) verpacktem Gargut (14) in einem Gargerät (10), das eine Heizvorrichtung (24) und einen Lüfter (30) umfasst, wobei das Verfahren die folgenden Schritte umfasst:

   a) Vorgeben eines verpackungsspezifischen Grenzwerts für die Verpackung des Garguts (14);
   b) Ermitteln anhand des verpackungsspezifischen Grenzwerts einen zulässigen Parameterbereich für eine Lüfterdrehzahl des Lüfters (30) und eine Garraumtemperatur, wobei die Lüfterdrehzahl und die Garraumtemperatur im zulässigen Parameterbereich voneinander abhängen; und
   c) Steuern des Lüfters (30) und der Heizvorrichtung (24), sodass die Lüfterdrehzahl und die Garraumtemperatur im zulässigen Parameterbereich liegen.

2. Verfahren nach Anspruch 1, **dadurch gekennzeichnet, dass** der verpackungsspezifische Grenzwert dem Gargerät (10) vorgegeben wird, indem das Gargerät (10) den verpackungsspezifischen Grenzwert mittels eines Sensors (42) eingegeben wird, insbesondere eines 2D-Code-Sensors oder eines RFID-Sensors.

3. Verfahren nach Anspruch 1, **dadurch gekennzeichnet, dass** der verpackungsspezifische Grenzwert dem Gargerät (10) vorgegeben wird, indem der verpackungsspezifische Grenzwert über eine Benutzerschnittstelle (44) eingegeben wird.

4. Verfahren nach einem der vorhergehenden Ansprüche, **dadurch gekennzeichnet, dass** der zulässige Parameterbereich basierend auf einem Modell, einem funktionalen Zusammenhang oder einer Tabelle, insbesondere anhand empirischer Daten, in Abhängigkeit des verpackungsspezifischen Grenzwerts ermittelt wird.

5. Verfahren nach einem der vorhergehenden Ansprüche, **dadurch gekennzeichnet, dass** der verpackungsspezifische Grenzwert ein vorgegebener Wärmegrenzwert oder ein vorgegebener Temperaturgrenzwert ist.

6. Verfahren nach Anspruch 5, **dadurch gekennzeichnet, dass** ein Wärmegrenzwert anhand des vorgegebenen Temperaturgrenzwerts und unter Berücksichtigung wenigstens eines wärmestromrelevanten Parameters bestimmt wird.

7. Verfahren nach Anspruch 6, **dadurch gekennzeichnet, dass** es sich bei dem Wärmegrenzwert um einen maximal zulässigen Wärmestromdichtewert für die Verpackung des zu garenden Garguts handelt.

8. Verfahren nach Anspruch 6 oder 7, **dadurch gekennzeichnet, dass** der wärmestromrelevante Parameter ein Wärmeübergangskoeffizient oder eine wärmeaufnehmende Produktoberfläche der Verpackung (20) des zu garenden Garguts (14) ist.

9. Verfahren nach einem der vorhergehenden Ansprüche, **dadurch gekennzeichnet, dass** der zulässige Parameterbereich basierend auf einer maximal zulässigen Wärmestromdichtewert für die Verpackung (20) des zu garenden Garguts (14) ermittelt wird.

10. Verfahren nach einem der vorhergehenden Ansprüche, **dadurch gekennzeichnet, dass** das Gargerät (10) beim Ermitteln des zulässigen Parameterbereichs neben dem verpackungsspezifischen Grenzwert zusätzlich wenigstens einen verpackungsbezogenen Parameter berücksichtigt.

11. Verfahren nach Anspruch 10, **dadurch gekennzeichnet, dass** der verpackungsbezogene Parameter ein Gewicht des verpackten Garguts (14) inklusive der Verpackung (20), eine werkstoffspezifische Kenngröße der Verpackung (20) des zu garenden Garguts (14), bevorzugt ein Feuchtegrenzwert, ein Mikrowellengrenzwert, oder eine gargutspezifische Kenngröße des zu garenden Garguts (14) ist.

12. Verfahren nach einem der vorhergehenden Ansprüche, **dadurch gekennzeichnet, dass** ein Mindestwert für die Lüfterdrehzahl des Lüfters (30) und/oder die Garraumtemperatur vorgegeben ist.

13. Verfahren nach Anspruch 12, **dadurch gekennzeichnet, dass** der Mindestwert in Abhängigkeit eines Garprogramms vorgegeben ist, basierend auf dem das Gargut (14) im Gargerät (10) gegart wird.

14. Verfahren nach einem der vorhergehenden Ansprüche, **dadurch gekennzeichnet, dass** der zulässige Parameterbereich zusätzlich einen Wert für eine Garraumfeuchte umfasst, wobei die Garraumfeuchte, die Lüfterdrehzahl und die Garraumtemperatur im zulässigen Parameterbereich voneinander abhängen, und wobei ein Dampferzeuger (26) zusätzlich derart angesteuert wird, dass die Garraumfeuchte im zulässigen Parameterbereich liegt.

15. Gargerät (10) zum Garen von einem verpackten Gargut (14), mit einem Garraum (12), wobei das Gargerät (10) eine Heizvorrichtung (24) und einen Lüfter (30) aufweist, die eine Garraumatmosphäre im Garraum (12) erzeugen, wobei das Gargerät (10) zudem einen Temperatursensor (34) zum Erfassen einer Garraumtemperatur umfasst,

wobei das Gargerät (10) eine Auswerteeinheit (40) aufweist, die signalübertragend mit dem Temperatursensor (34) verbunden ist, wobei die Auswerteeinheit (40) eingerichtet ist, einen verpackungsspezifischen Grenzwert für die Verpackung (20) des Garguts (14) zu empfangen und anhand des verpackungsspezifischen Grenzwerts einen zulässigen Parameterbereich für eine Lüfterdrehzahl des Lüfters (30) und eine Garraumtemperatur zu ermitteln, wobei die Lüfterdrehzahl und die Garraumtemperatur im zulässigen Parameterbereich voneinander abhängen, und wobei das Gargerät (10) eine Steuerung (32) aufweist, die mit der Auswerteeinheit (40) signalübertragend verbunden ist, wobei die Steuerung (32) dazu eingerichtet ist, den Lüfter (30) und die Heizvorrichtung (24) anzusteuern, sodass die Lüfterdrehzahl und die Garraumtemperatur im zulässigen Parameterbereich liegen.

10

42    24    28  34    38

12

20

14

16

18

44  40  22  32    26  36    30

**Fig. 1**

S1

S2

S3

**Fig. 2**

Fig. 3

**Europäisches Patentamt**
**European Patent Office**
**Office européen des brevets**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 117748 A1 (RATIONAL AG [DE]) 18. Januar 2024 (2024-01-18) * Zusammenfassung * * Absätze [0001], [0002], [0007], [0010], [0015] – [0022], [0046] – [0060], [0079] – [0084] * * Ansprüche 1-5 * * Abbildungen 1,2 * | 1-15 | INV. H05B6/64 H05B1/02 |
| A | DE 10 2015 103504 A1 (RATIONAL AG [DE]) 15. September 2016 (2016-09-15) * Zusammenfassung * * Abbildung 1 * * Absätze [0002], [0005], [0009] – [0013], [0025] – [0033], [0039] * * Ansprüche 1-3 * | 1-15 | |
| A | US 2023/136782 A1 (STORIZ PAUL [US] ET AL) 4. Mai 2023 (2023-05-04) * Zusammenfassung * * Abbildungen 2,6 * * Absatz [0061] * | 1-15 | |
| | | | RECHERCHIERTE SACHGEBIETE (IPC) |
| A | US 2020/205245 A1 (MA MINYANG [US] ET AL) 25. Juni 2020 (2020-06-25) * Zusammenfassung * * Abbildung 1 * * Absatz [0055] * | 1-3 | H05B F24C |
| A | WO 94/28695 A1 (IHMELS CHRISTIAN [DE]) 8. Dezember 1994 (1994-12-08) * Zusammenfassung * * Abbildungen 1-3 * * Seite 6, Zeile 28 - Seite 8, Zeile 16 * | 1-15 | |

Der vorliegende Recherchenbericht wurde für alle Patentansprüche erstellt

| Recherchenort | Abschlußdatum der Recherche | Prüfer |
|---|---|---|
| München | 27. November 2025 | de la Tassa Laforgue |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
....................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 18 5120

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2025

| Im Recherchenbericht angeführtes Patentdokument | Datum der Veröffentlichung | Mitglied(er) der Patentfamilie | | Datum der Veröffentlichung |
|---|---|---|---|---|
| DE 102022117748 A1 | 18-01-2024 | KEINE | | |
| DE 102015103504 A1 | 15-09-2016 | KEINE | | |
| US 2023136782 A1 | 04-05-2023 | CA | 3179268 A1 | 01-05-2023 |
| | | EP | 4175411 A2 | 03-05-2023 |
| | | US | 2023136782 A1 | 04-05-2023 |
| US 2020205245 A1 | 25-06-2020 | CN | 110864349 A | 06-03-2020 |
| | | EP | 3672366 A1 | 24-06-2020 |
| | | JP | 2020102440 A | 02-07-2020 |
| | | KR | 20200077446 A | 30-06-2020 |
| | | TW | 202033053 A | 01-09-2020 |
| | | US | 2020205245 A1 | 25-06-2020 |
| WO 9428695 A1 | 08-12-1994 | AU | 6505794 A | 20-12-1994 |
| | | DE | 4317624 C1 | 01-06-1994 |
| | | EP | 0626798 A1 | 30-11-1994 |
| | | WO | 9428695 A1 | 08-12-1994 |

EPO FORM P0461

Für nähere Einzelheiten zu diesem Anhang : siehe Amtsblatt des Europäischen Patentamts, Nr.12/82